(19) **Europäisches Patentamt / European Patent Office / Office européen des brevets**

(11) **EP 3 512 088 B1**

(12) # EUROPEAN PATENT SPECIFICATION

(45) Date of publication and mention
of the grant of the patent:
**21.10.2020 Bulletin 2020/43**

(51) Int Cl.:
*H02M 7/483* (2007.01)  *H02M 7/49* (2007.01)
*H02M 1/14* (2006.01)

(21) Application number: **18151950.5**

(22) Date of filing: **16.01.2018**

(54) **VOLTAGE SOURCE CONVERTER**

SPANNUNGSQUELLENUMRICHTER

CONVERTISSEUR DE SOURCE DE TENSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.07.2019 Bulletin 2019/29**

(73) Proprietor: **General Electric Technology GmbH
5400 Baden (CH)**

(72) Inventors:
• **COSTABEBER, Alessandro
Nottingham, NG7 3BB (GB)**

• **JANKOVIC, Marija
14000 Valjevo (RS)**

(74) Representative: **Brevalex
95, rue d'Amsterdam
75378 Paris Cedex 8 (FR)**

(56) References cited:
**EP-A1- 2 858 231    EP-A1- 2 916 447
EP-A1- 3 096 446    GB-A- 2 519 793**

**Description**

This invention relates to a voltage source converter, particularly for use in high voltage direct current (HVDC) power transmission.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC.

Document EP 3 096 446 A1 describes an AC/DC converter comprising a plurality of limbs connected in series, each limb including a phase element, a first sub-converter and a second sub-converter. The converter further comprises a controller configured to make the first and second sub-converters generate harmonic components to reduce harmonic distortion at the AC sides of the phase elements.

The invention is defined by the features of independent apparatus claim 1. The dependent claims recite advantageous embodiments of the invention. The configuration of the voltage source converter of the invention permits its operation to facilitate a power transfer between the DC and AC networks through the operation of the plurality of limbs to exchange the respective DC and AC powers with the DC and AC networks respectively and through the operation of the first sub-converters to control the respective DC voltages for presentation to the DC network.

In a preferred embodiment of the invention, the AC network is a multi-phase AC network, and each limb includes a phase element, each phase element including at least one AC terminal for connection to a respective phase of the multi-phase AC network, each phase element configured to interconnect a DC side voltage at a DC side of the phase element and an AC side voltage at an AC side of the phase element, each first sub-converter operably connected to the DC side of the corresponding phase element. This enables the voltage source converter to facilitate an AC-DC or DC-AC power transfer between the multi-phase AC and DC networks.

In use, the voltage source converter may experience a change in the or each AC power exchanged between at least one of the limbs and the AC network.

The change in the or each AC power exchanged between at least one of the limbs and the AC network may include, but is not limited to:

a drop in the or each AC power exchanged between the at least one limb and the AC network to zero or substantially zero;

an imbalance in the AC powers exchanged between the plurality of limbs and the AC network; and/or

a fault in the AC network which causes the change in the or each AC power exchanged between the at least one limb and the AC network.

The change in the or each AC power exchanged between the or each affected limb and the AC network results in an imbalance between the DC and AC powers exchanged by the or each affected limb with the DC and AC networks respectively. This power imbalance results in a net non-zero average power being absorbed or injected by the or each affected limb, which can be detrimental to the operation of the voltage source converter. It will be appreciated that the net average power of a component of the voltage source converter may refer, but is not limited, to the net average power of the component over an operating cycle of the voltage source converter.

One possible solution would be to shut down the voltage source converter until the cause of the change in the or each AC power exchanged between the or each affected limb and the AC network is identified and fixed. The shutdown of the voltage source converter however results in an interruption of the power transfer between the DC and AC networks, which could be costly and inconvenient.

Another possible solution would be to operate the first sub-converter of the affected limb to change the corresponding DC voltage for presentation to the DC network. This would however require an increase in the voltage rating of one or more of the first sub-converters in order to ensure that all of the first sub-converters in combination continue to present the summed DC voltage to the DC network. Increasing the voltage rating of one or more of the first sub-converters would in turn increase the overall cost, size and weight of the voltage source converter.

The provision of the controller in the voltage source converter of the invention enables the generation of the summed DC voltage to include the first AC voltage component, which drives the alternating current component to flow through the first sub-converters so that the alternating current component interacts with the second AC voltage component generated by the or each first sub-converter of the or each affected limb in order to modify the power generated by the or each first sub-converter of the or each affected limb. Preferably a phase angle and/or an amplitude of the alternating current component is configured so that the alternating current component interacts with the second AC voltage component generated by the or each first sub-converter of the at least one limb so as to balance the DC and AC powers exchanged by the at least one limb with the DC and AC networks respectively.

Such modification of the power generated by the or each first sub-converter of the or each affected limb in turn enables the modification of the or each DC power exchanged between the or each affected limb and the DC network in order to achieve a balance between the DC and AC powers exchanged by the or each affected limb with the DC and AC networks respectively, thus avoiding the detrimental consequences of the power imbalance.

The configuration of the controller therefore provides the voltage source converter of the invention with the ability to continue facilitating the transfer of high quality power between the DC and AC networks during a change in the or each AC power exchanged between the or each affected limb and the AC network, without requiring any increase in the voltage rating of one or more of the first sub-converters.

Furthermore the use of the first sub-converters to provide control over the circulating current to flow through the first sub-converters allows for the selection from a wide range of values of the alternating current component in order to optimise the configuration of the voltage source converter. For example, the alternating current component may be selected to optimise the current and/or voltage ratings of the sub-converters of the voltage source converter.

In embodiments of the invention, the phase angle and/or the amplitude of the alternating current component may be configured relative to the first AC voltage component so as to minimise power generated from interaction between the first AC voltage component and the alternating current component. This further simplifies the balancing of the DC and AC powers exchanged by the or each affected limb with the DC and AC networks respectively.

The alternating current component may be further configured to be orthogonal or substantially orthogonal relative to the first AC voltage component. Such configuration of the alternating current component is particularly useful when there is a relatively small amount of inductance and resistance in the DC network.

In other such embodiments, the alternating current component may be further configured to be phase shifted relative to the first AC voltage component to compensate for power losses resulting from the flow of the alternating current component in the DC network. Such configuration of the alternating current component is particularly useful when there is a relatively significant amount of inductance and resistance in the DC network.

Preferably the controller is configured to selectively operate the or each first sub-converter of the at least one limb to generate the first AC voltage component so as to control the alternating current component to flow through the first sub-converters in response to the change in the or each AC power exchanged between the at least one limb and the AC network.

The configuration of the voltage source converter may vary, non-limiting examples of which are described as follows.

Each first sub-converter may include at least one energy storage device capable of storing and releasing energy to selectively provide a voltage. The ability of the or each energy storage device to selectively provide a voltage source provides each first sub-converter with a reliable means of acting as a waveform synthesizer.

In embodiments employing the use of one or more energy storage devices in each first sub-converter, the alternating current component may be configured so that the alternating current component interacts with the second AC voltage component generated by the or each first sub-converter of the at least one limb so as to balance the DC and AC powers exchanged by the at least one limb with the DC and AC networks respectively so that a respective net change in energy stored in the or each first sub-converter of the at least one limb is controlled to be zero or substantially zero.

Each limb may further include a second sub-converter connected between the first sub-converter and the or each terminal, each second sub-converter configured to be controllable to act as a waveform synthesizer to control a voltage for presentation to the or each corresponding terminal. Optionally each second sub-converter may include at least one energy storage device capable of storing and releasing energy to selectively provide a voltage.

In embodiments employing the use of one or more energy storage devices in the first and second sub-converters, the controller may be configured to selectively control an exchange of energy between the first and second sub-converters in each limb by: for each limb, selectively operating the first sub-converter to synthesize at least one first energy controlling voltage component, and operating the second sub-converter to synthesize at least one second energy controlling voltage component that is in anti-phase with the or each first energy controlling voltage component, wherein each of the first and second energy controlling voltage components is in-phase with a current flowing through the first and second sub-converters.

The above control of the exchange of energy between the first and second sub-converters may be carried out in respect of the or each unaffected limb concurrently with the operation of the first sub-converters to generate the summed DC voltage including the first AC voltage component for presentation to the DC network so as to control the circulating current to flow through the first sub-converters in response to the change in the or each AC power exchanged between the or each affected limb and the AC network. This enables regulation of the energy levels of the first and second sub-converters in the unaffected limbs at the same time as balancing the DC and AC powers exchanged by the or each affected limb with the DC and AC networks respectively.

In further embodiments of the invention, the alternating current component may be configured so that the alternating current component interacts with the second AC voltage component generated by each first sub-converter of the plurality of limbs so as to balance the DC and AC powers exchanged by each of the plurality of limbs with the DC and AC networks respectively.

Such configuration of the alternating current component enables the balancing of the DC and AC powers exchanged by all of the limbs (i.e. the affected and non-affected limbs) with the DC and AC networks respectively.

In such embodiments employing the use of one or more energy storage devices in the second sub-converters, the alternating current component may be configured so that the alternating current component interacts with the second AC voltage component generated by each first sub-converter of the plurality of limbs so as to balance the DC and AC powers exchanged by each of the plurality of limbs with the DC and AC networks respectively so that a respective net change in energy stored in each first sub-converter of the plurality of limbs is controlled to be zero or substantially zero.

Such configuration of the alternating current component enables the regulation of the energy levels of the first and second sub-converters in all of the plurality of limbs (i.e. the affected and non-affected limbs) at the same time as balancing the DC and AC powers exchanged by the or each affected limb with the DC and AC networks respectively.

Operation of a given sub-converter as a waveform synthesizer could result in energy accumulation in (or energy loss from) at least one energy storage device, thus resulting in deviation of the energy level of at least one energy storage device from a reference value.

Such a deviation is undesirable because, if too little energy is stored within a given energy storage device then the voltage of the corresponding module is reduced, whereas if too much energy is stored in a given energy storage device then over-voltage problems may arise. The former would require the addition of a power source to restore the energy level of the affected energy storage device to the reference value, while the latter would require an increase in voltage rating of one or more energy storage devices to prevent the over-voltage problems, thus adding to the overall cost, size and weight of the voltage source converter. In addition if too little energy is stored within a given energy storage device then the voltage source converter might trip due to undervoltage protection.

The above ways of regulating the energy stored in the or each energy storage device of each sub-converter usefully obviates the problems associated with a deviation of the energy level of at least one energy storage device from the reference value.

The control of a net change in energy stored in the or each energy storage device of each sub-converter to be zero or substantially zero is preferably carried out over a defined period of time, e.g. a single power frequency cycle.

It will be appreciated that each limb and its components may be configured in different ways to vary the topology of the voltage source converter, non-limiting examples of which are described as follows.

The manner in which each limb is connected between the first and second DC terminals may vary. For example, the plurality of limbs may be connected in series between the first and second DC terminals.

Each limb may include a plurality of switching elements configured to operably interconnect the first sub-converter and the or each terminal. For example, the plurality of switching elements in each phase element may include two parallel-connected pairs of series-connected switching elements, a junction between each pair of series-connected switching elements defining a terminal for connection to the AC network.

In a preferred embodiment of the invention, each sub-converter may include at least one module, the or each module including at least one switching element and at least one energy storage device capable of storing and releasing energy to selectively provide a voltage, the or each switching element and the or each energy storage device in the or each module arranged to be combinable to selectively provide a voltage source.

The inclusion of the or each module in each sub-converter provides each sub-converter with a reliable means of acting as a waveform synthesizer.

Each sub-converter may include a plurality of series-connected modules that defines a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. As such the chain-link converter is capable of providing a wide range of complex voltage waveforms.

The or each module in each sub-converter may vary in configuration.

Optionally the voltage source may be a unidirectional or bidirectional voltage source.

In a first exemplary configuration of a module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltages and can conduct current in two directions.

In a second exemplary configuration of a module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltages and can conduct current in two directions.

It will be appreciated that the voltage source converter may include a different number of limbs.

A preferred embodiment of the invention will now be described, by way of a non-limiting example, with reference to the accompanying drawings in which:

Figure 1 shows schematically a voltage source converter according to an embodiment of the invention;

Figures 2a and 2b respectively show schematically the structures of a 2-quadrant unipolar module and a 4-quadrant bipolar module;

Figures 3 to 5 show schematically the operation of the voltage source converter of Figure 1;

Figure 6 shows a flowchart of a first exemplary operation of the voltage source converter of Figure 1 during a single phase-to-ground fault;

Figure 7 shows schematically the configuration of the voltage source converter of Figure 1 during a single phase-to-ground fault;

Figures 8 to 12 illustrate the performance of the voltage source converter of Figure 1 when carrying out the first exemplary operation of Figure 6;

Figures 13 and 14 illustrate an active power-reactive power operating region of the voltage source converter of Figure 1 when carrying out the first exemplary operation of Figure 6;

Figure 15 shows a flowchart of a second exemplary operation of the voltage source converter of Figure 1 during a single phase-to-ground fault;

Figures 16 to 19 illustrate the performance of the voltage source converter of Figure 1 when carrying out the second exemplary operation of Figure 15;

Figures 20 and 21 illustrate an active power-reactive power operating region of the voltage source converter of Figure 1 when carrying out the second exemplary operation of Figure 15; and

Figures 22 and 23 illustrate the performance of the voltage source converter of Figure 1 when carrying out a variation of the second exemplary operation of Figure 15.

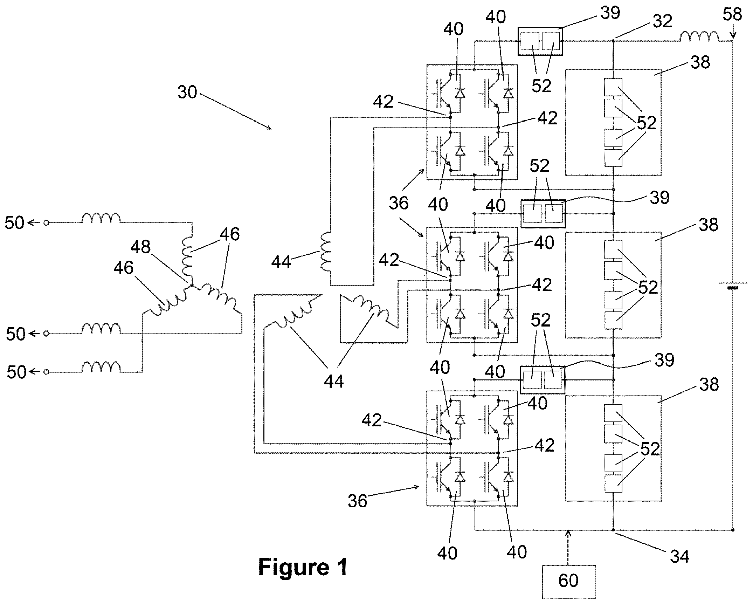

A voltage source converter according to an embodiment of the invention is shown in Figure 1, and is designated generally by the reference numeral 30.

The voltage source converter 30 comprises first and second DC terminals 32,34, a plurality of phase elements 36, a plurality of first sub-converters 38, and a plurality of second sub-converters 39.

Each phase element 36 includes two parallel-connected pairs of series connected switching elements 40. A junction between each pair of series-connected switching elements 40 defines an AC terminal. The AC terminals of each phase element 36 define the AC side 42 of that phase element 36.

In Figure 1, the AC terminals of each phase element 36 are interconnected by a respective one of a plurality of open secondary transformer windings 44. Each secondary transformer winding 44 is mutually coupled with a respective one of a plurality of primary transformer windings 46. The plurality of primary transformer windings 46 are connected in a star configuration in which a first end of each primary transformer winding 46 is connected to a common junction 48 and a second end of each primary transformer winding 46 is connected to a respective phase of a three-phase AC network 50 which is in the form of an AC grid. In this manner, in use, the AC side 42 of each phase element 36 is connected to a respective phase of a three-phase AC network 50. The common junction 48 defines a neutral point of the plurality of primary transformer windings 46, and is grounded (not shown).

Each phase element 36 is connected in series with a respective one of the plurality of second sub-converters 39 to define an electrical block. Each first sub-converter 38 is connected in parallel with a respective one of the electrical blocks to form a limb.

Each sub-converter 38,39 includes a plurality of modules 52.

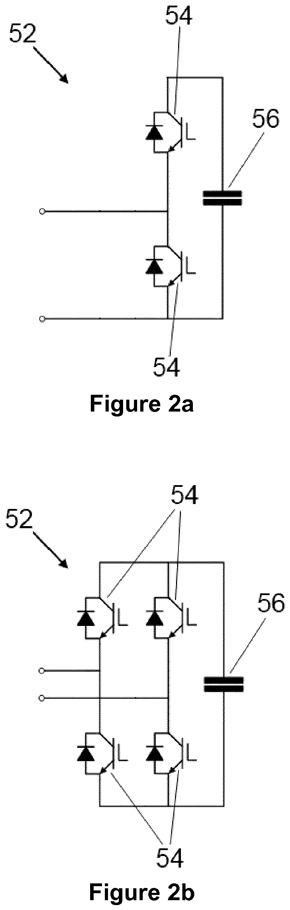

Each module 52 of each first sub-converter 38 includes a pair of switching elements 54 and an energy storage device 56 in the form of a capacitor. In each first sub-converter 38, the pair of switching elements 54 is connected in parallel with the capacitor 56 in a half-bridge arrangement to define a 2-quadrant unipolar module that can provide zero or positive voltages and can conduct current in two directions, as shown in Figure 2a.

Each module 52 of each second sub-converter 39 includes two pairs of switching elements 54 and an energy storage device 56 in the form of a capacitor. In each second sub-converter 39, the pairs of switching elements 54 are connected in parallel with the capacitor 56 in a full-bridge arrangement to define a 4-quadrant bipolar module that can provide negative, zero or positive voltages and can conduct current in two directions, as shown in Figure 2b.

The plurality of limbs are connected in series between the first and second DC terminals 32,34. As such the first sub-converters 38 are connected in series between the first and second DC terminals 32,34. In use, the first and second DC terminals 32,34 are respectively connected to first and second terminals of a DC network 58 including an off-shore converter 62, the first terminal of the DC network 58 carrying a positive DC voltage, the second terminal of the DC network 58 carrying a negative DC voltage.

The configuration of each limb as set out above means that, in use, a DC voltage appears across the parallel-connected pairs of series-connected switching elements 40 of each phase element 36. Hence, in use, each phase element 36 interconnect a DC side voltage at a DC side of the phase element 36 and an AC side voltage at an AC side 42 of the phase element 36. In other embodiments, it is envisaged that each phase element may include a plurality of switching elements with a different configuration to interconnect a DC voltage and an AC voltage.

Each switching element 40,54 includes a single switching device. Each switching element 40,54 further includes a passive current check element that is connected in anti-parallel with each switching device.

Each switching device is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of switching devices in each switching element may vary depending on the required voltage rating of that switching element.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

It is also envisaged that, in other embodiments of the invention, each switching device may be replaced by a passive current check device, such as a diode.

It is further envisaged that, in other embodiments of the invention, each capacitor may be replaced by another type of energy storage device that is capable of storing and releasing energy to selectively provide a voltage, e.g. a fuel cell or battery.

The plurality of series-connected modules 52 in each sub-converter 38,39 defines a chain-link converter.

The capacitor 56 of each module 52 is selectively bypassed or inserted into the chain-link converter by changing the states of the switching elements 54. This selectively directs current through the capacitor 56 or causes current to bypass the capacitor 56 so that the module 52 provides a zero or positive voltage in the case of each first sub-converter 38, and the module 52 provides a negative, zero or positive voltage in the case of each second sub-converter 39.

The capacitor 56 of the module 52 is bypassed when the switching elements 54 in the module 52 are configured to form a short circuit in the module 52. This causes current in the chain-link converter to pass through the short circuit and bypass the capacitor 56, and so the module 52 provides a zero voltage, i.e. the module 52 is configured in a bypassed mode.

The capacitor 56 of the module 52 is inserted into the chain-link converter when the switching elements 54 in the module 52 are configured to allow the current in the chain-link converter to flow into and out of the capacitor 56. The capacitor 56 then charges or discharges its stored energy so as to provide a non-zero voltage, i.e. the module 52 is configured in a non-bypassed mode.

It is envisaged that, in other embodiments of the invention, each module may be replaced by another type of module that includes at least one switching element and at least one energy storage device, the or each switching element and the or each energy storage device in the or each module arranged to be combinable to selectively provide a voltage source.

The structure of the chain-link converter permits build-up of a combined voltage across the chain-link converter, which is higher than the voltage available from each of its individual modules 52, via the insertion of the energy storage devices 56 of multiple modules 52, each providing its own voltage, into the chain-link converter. In this manner switching of each switching element 54 in each module 52 causes the chain-link converter to provide a stepped variable voltage source, which permits the generation of a voltage waveform across the chain-link converter using a step-wise approximation. As such each chain-link converter is capable of providing a wide range of complex voltage waveforms.

The parallel connection of the first sub-converter 38 and electrical block in each limb permits the first sub-converter 38 to selectively act as a waveform synthesizer to modify a first DC voltage that is presented to the DC network. The first DC voltages combine to present a summed DC voltage to the first and second DC terminals 32,34, in which each first DC voltage is one-third of the summed DC voltage.

The series connection of the second sub-converter 39 and phase element 36 in each limb permits the second sub-converter 39 to selectively act as a waveform synthesizer to modify a second DC voltage at a DC side of the corresponding phase element 36. Such modification of the second DC voltage at the DC side of the corresponding phase element 36 results in a corresponding modification of the AC side voltage at the AC side 42 of the corresponding phase element 36.

It is envisaged that, in other embodiments of the invention, the configuration of each first sub-converter may vary as long as each first sub-converter is capable of selectively acting as a waveform synthesizer to modify the respective first DC voltage, and the configuration of each second sub-converter may vary as long as each second sub-converter is capable of selectively acting as a waveform synthesizer to modify the respective second DC voltage.

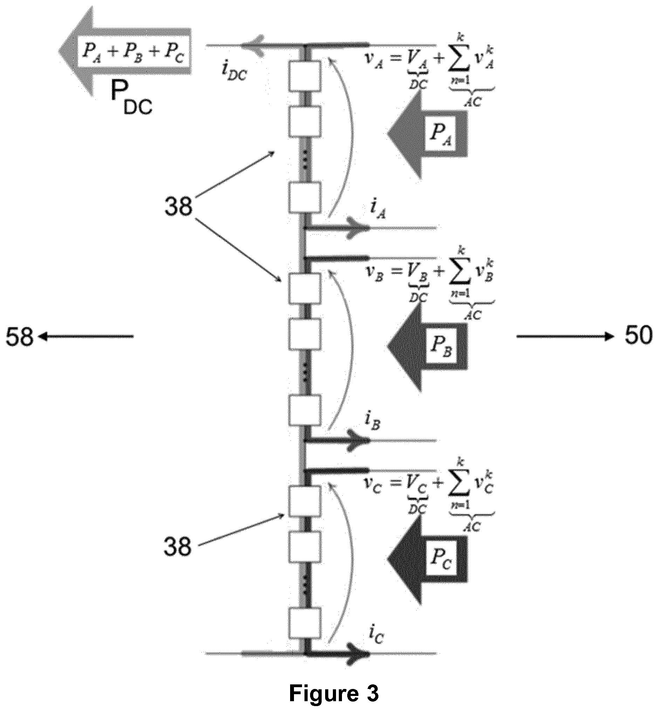

Figure 3 illustrates the operation of each limb to exchange a respective DC power with the DC network 58 and a respective AC power $P_A, P_B, P_C$ with the AC network 50. The DC power exchanged by each limb with the DC network 58 arises as a result of interaction between a common direct current $i_{DC}$ flowing through the first sub-converters 38 and the first DC voltage of the corresponding first sub-converter 38. As a result, under normal operating conditions, the DC power exchanged by each limb with the DC network 58 is one-third of the total DC power $P_{DC}$ exchanged between the voltage source converter 30 and the DC network 58.

It is envisaged that, in other embodiments of the invention, the DC power exchanged by each limb with the DC network may represent a different fraction of the total DC power exchanged between the voltage source converter and the DC network. In such embodiments, the respective DC powers exchanged by the limbs with the DC network 58 may be unequal.

The voltage source converter 30 further includes a controller 60 configured to control the phase element 36 and the first and second sub-converters 38,39.

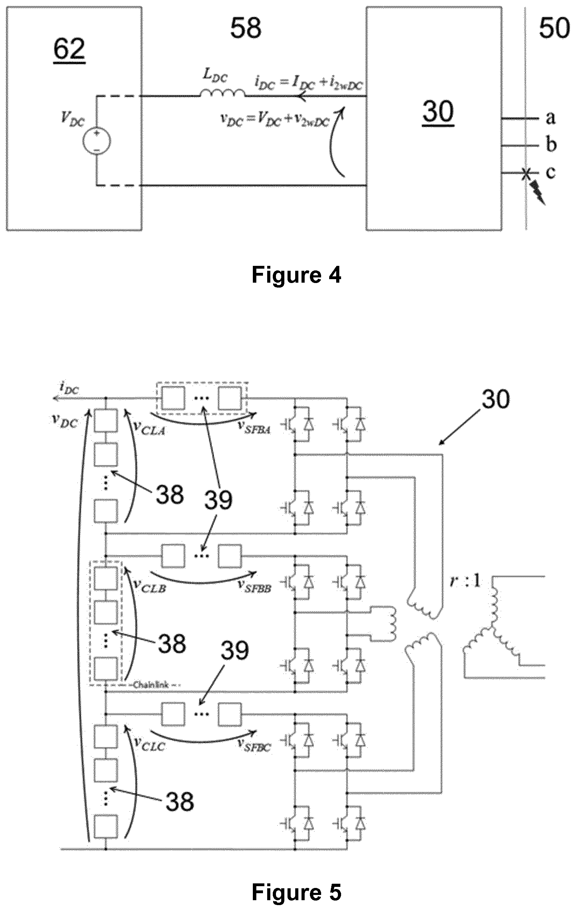

Exemplary nominal system parameters of the voltage source converter 30 and the associated AC and DC networks 50,58 are summarised in the following table, with reference to Figures 4 and 5.

| $V_{DC}$ [kV] | $V_{AC}$ [kV] | r | $P_{max}$ [MW] | $L_{AC}$ [mH] | $L_{DC}$ [mH] |
|---|---|---|---|---|---|
| +/-320 | 400 | 0.95 | 600 | 101.9 | 100 |

The configuration of the voltage source converter 30 permits its operation to facilitate a power transfer between the AC and DC networks 50,58 through the switching of the phase elements 36 and through the operation of the first and second sub-converters 38,39 to modify the respective first and second DC voltages. During normal operation of the voltage source converter 30, the AC and DC powers exchanged by each limb with the AC and DC networks 50,58 respectively are balanced.

The second sub-converters 39 are operated to shape the second DC voltage at the DC side of each phase element 36 to take the form of a rectified sinusoidal waveform so that the AC side voltages at the AC sides 42 of the phase elements 36 are shaped to be sinusoidal. Each rectified sinusoidal waveform has an amplitude corresponding to an average voltage equal to one-third of the summed DC voltage and a phase shift of 120 electrical degrees.

As a result each first DC voltage includes undesirable ripple components in the form of one or more even harmonics of the AC supply frequency, which in turn results in the presence of DC ripple in the form of the 6th harmonic and/or multiples thereof in the summed DC voltage presented to the DC network 58. To eliminate the DC ripple, each first sub-converter 38 may be operated to synthesize a waveform $V_A, V_B, V_C$ including a DC voltage component $V_A, V_B, V_C$ and at least one even harmonic voltage component $V_A^k, V_B^k, V_C^k$ with each synthesized waveform operating at a phase difference of 120 electrical degrees to the other two synthesized waveforms. The summation of these three synthesized waveforms leads to the even harmonic voltage components cancelling out each other and thereby results in a ripple-free summed DC voltage consisting of the DC voltage components at the DC network 58.

In addition, to control an exchange of energy between the first and second sub-converters 38,39 in each limb, the second sub-converter 39 synthesizes at least one additional even harmonic voltage component which is in anti-phase with the even harmonic voltage component(s) synthesized by the corresponding first sub-converter, and each of the even harmonic voltage components synthesized by the first and second sub-converters 38,39 is in-phase with an even harmonic current component flowing through the first and second sub-converters 38,39.

In use, the voltage source converter 30 may experience a change in the or each AC power exchanged between at least one of the limbs and the AC network 50. The working of the invention will be described with reference to a single phase-to-ground fault which causes a drop in the AC power exchanged between the affected limb and the AC network 50 to zero (or substantially zero), but it will be understood that the invention is applicable mutatis mutandis to other circumstances in which the voltage source converter 30 experiences a change in the or each AC power exchanged between at least one of the limbs and the AC network 50, such as an imbalance in the AC powers exchanged between the plurality of limbs and the AC network 50.

The occurrence of the single phase-to-ground fault is described with reference to phase C of the three phases A,B,C, as shown in Figure 4. It will be understood that such description applies mutatis mutandis to the other two phases A,B unless specified otherwise.

As a result of the single phase-to-ground fault causing a drop in the AC power exchanged between the affected limb and the AC network 50 to zero (or substantially zero), the affected limb exchanges zero AC power with the AC network 50 but continues to exchange DC power with the DC network 58 due to the interaction between the direct current flowing through the first sub-converters 38 and the first DC voltage of the first sub-converter 38 of the affected limb. This imbalance between the AC and DC powers exchanged by the affected limb with the AC and DC networks 50,58 respectively results in a non-zero net average power being absorbed or injected by the affected limb, which could lead to uncontrolled charging and discharging of the capacitors 56 of the first sub-converter 38 of the affected limb.

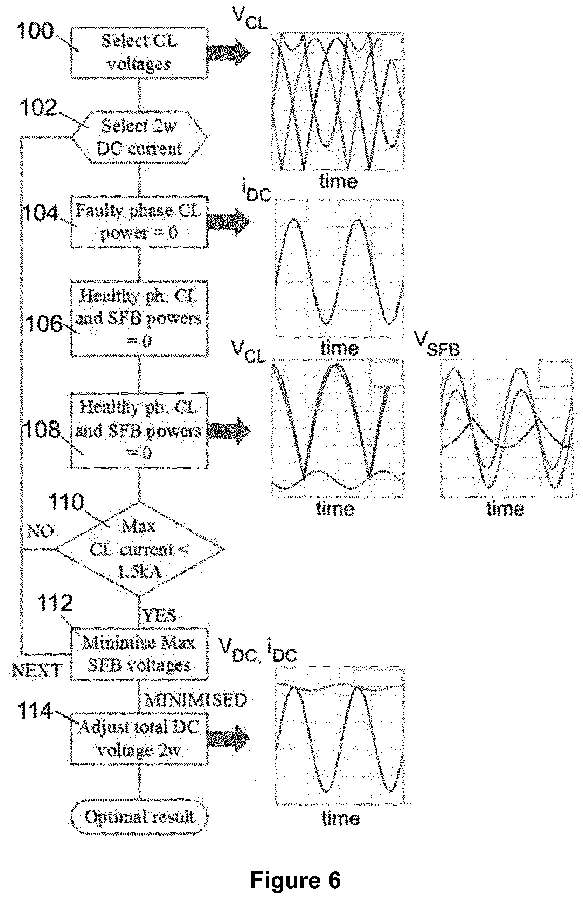

A first exemplary operation of the voltage source converter 30 in response to the single phase-to-ground fault is described with reference to Figure 6, which shows a flowchart of the first exemplary operation of the voltage source converter 30.

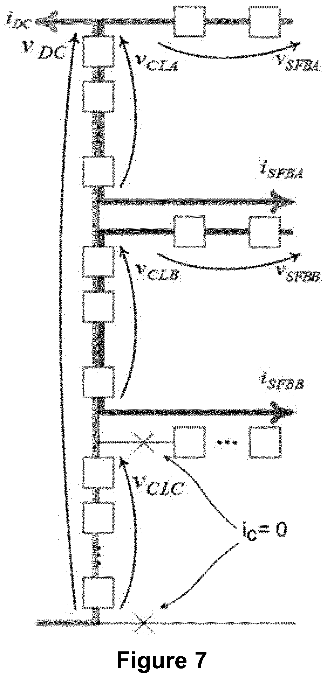

In response to the single phase-to-ground fault, the first sub-converters 38 are operated 100 to generate the summed DC voltage including one or more additional even harmonic voltage component so as to control a circulating current to flow through the first sub-converters 38. More specifically, the first sub-converter 38 of the affected limb corresponding to phase C is operated to generate its first DC voltage and the additional even harmonic voltage component(s), the second sub-converter 39 of the affected limb effectively forms an open circuit due to a zero current flow, as shown in Figure 7, and the waveform synthesis operations of the first and second sub-converters 38,39 of the healthy limbs corresponding to phases A,B remain unchanged. The generation of the additional even harmonic voltage component(s) by the first sub-converter 38 of the affected limb results in the flow of an even harmonic current component through the first sub-converters 38. Hence, the circulating current flowing through the first sub-converters 38 includes the direct current and the even harmonic current component.

Next the phase angle and amplitude of the even harmonic current component of the circulating current is selected 102. By selecting a suitable phase angle and amplitude of the even harmonic current component of the circulating current, the interaction 104 of the even harmonic current component with the even harmonic voltage component(s) synthesized by the first sub-converter 38 of the affected limb (which is different to the additional even harmonic voltage component(s)) cancels out the power generated by the interaction between the direct current flowing through the first sub-converters 38 and the first DC voltage of the first sub-converter 38 of the affected limb. This has the effect of achieving a zero net average power in the first sub-converter 38 of the affected limb.

Meanwhile the current flowing through each second sub-converter 39 of the healthy limbs is defined by the voltage source converter operating point P,Q, while the voltage across each second sub-converter 39 of the healthy limbs is defined as the difference between the rectified sinusoidal waveform at the DC side of the corresponding phase element 36 and the voltage across the corresponding first sub-converter 38, as shown in Figure 7. In view of the waveforms shown in Figures 6 and 7, it is possible that the average power in the first and second sub-converters 38,39 of the healthy limbs may not be zero. Thus, to ensure zero average power in the first and second sub-converters 38,39 of the healthy limbs, an exchange of energy between the first and second sub-converters 38,39 in each healthy limb is controlled 106,108 in the manner outlined above with respect to the normal operation of the voltage source converter 30.

On the assumption that the DC network 58 is lossless, the even harmonic current component is configured to be orthogonal (or substantially orthogonal) to the additional even harmonic voltage component(s), and has an amplitude calculated based on the phase shift. This is so that the additional even harmonic voltage component(s) does not interact with the even harmonic current component to produce any active power to avoid any adverse effect on the maintenance of the zero net average power in the first sub-converter 38 of the affected limb. In practice, the DC network 58 includes cables and inductors with relatively significant amounts of resistance and inductance, which could result in losses due to the flow of the even harmonic current component in the DC network 58. The even harmonic current component may be configured to have a different phase shift and/or amplitude relative to the additional even harmonic voltage component(s) in order to compensate for such losses, and this is described in further detail later on in this specification.

The selection of a suitable phase angle and amplitude of the even harmonic current component of the circulating current is described in further detail as follows.

In the embodiment shown, the phase angle and amplitude of the even harmonic voltage component(s) synthesized by the first sub-converter 38 of the affected limb is fixed. In principle the even harmonic current component circulated through the first sub-converters 38 is permitted to have any phase angle that is suitable for the generation of a power contribution with the right sign with respect to the phase angle of the even harmonic voltage component(s) synthesized by the first sub-converter 38 of the affected limb. The amplitude of the even harmonic current component of the circulating current is then calculated based on the determined phase angle of the even harmonic current component of the circulating current in order to achieve a zero net average power in the first sub-converter 38 of the affected limb in accordance with the following equation:

$$P_{CLC} = -\overline{v_{CLC}i_{DC}} = 0$$

Where $P_{CLC}$ is the net average power in the first sub-converter 38 of the affected limb, $V_{CLC}$ is the voltage waveform synthesized by the first sub-converter 38 of the affected limb, and $i_{DC}$ is the circulating current.

For an arbitrary phase angle of the even harmonic current component of the circulating current, the requirement to obtain a zero net average power in the first sub-converter 38 of the affected limb defines the required amplitude of the even harmonic current component of the circulating current.

In view of the defined phase angle and amplitude of the even harmonic current component of the circulating current, it is possible to ensure a zero average power in the first and second sub-converters 38,39 of the healthy limbs in accordance with the following equations:

$$P_{CLA} = \overline{v_{CLA}\left(i_{SFBA} - i_{DC}\right)} = 0$$

$$P_{SFBA} = \overline{v_{SFBA}i_{SFBA}} = 0$$

$$P_{CLB} = \overline{v_{CLB}\left(i_{SFBB} - i_{DC}\right)} = 0$$

$$P_{SFBB} = \overline{v_{SFBB}i_{SFBB}} = 0$$

Where $P_{CLA}$ and $P_{CLB}$ are the net average powers in the first sub-converters 38 of the healthy limbs, $P_{SFBA}$ and $P_{SFBB}$ are the net average powers in the second sub-converters 39 of the healthy limbs, $V_{CLA}$ and $V_{CLB}$ are the voltage waveforms synthesized by the first sub-converters 38 of the healthy limbs, $V_{SFBA}$ and $V_{SFBB}$ are the voltage waveforms synthesized by the second sub-converters 39 of the healthy limbs, $i_{SFBA}$ and $i_{SFBB}$ are the currents flowing through the second sub-converters 39 of the healthy limbs, and $i_{DC}$ is the circulating current.

The even harmonic current component may be selected to optimise the current and voltage ratings of the sub-converters 38,39.

The even harmonic current component may be selected to limit the peak current 110 in the first sub-converters 38 to a certain value (e.g., 1.5 kA) and to limit the voltage rating 112 of each second sub-converter 39 to be a certain fraction (e.g. 30%) of the voltage rating of each first sub-converter 38 in order to avoid unnecessary overrating of the voltage source converter 30. For example, assuming that the voltage rating of each first sub-converter 38 is expected to be at 60% of the DC network voltage across the first and second DC terminals 32,34, the voltage rating of each second sub-converter 39 should be rated at 18% of the DC voltage across the first and second DC terminals 32,34, which is 115.2 kV for a 640 kV DC network voltage across the first and second DC terminals 32,34. The even harmonic current component is then selected to ensure that the peak current in the first sub-converters 38 stays within the desired current limit.

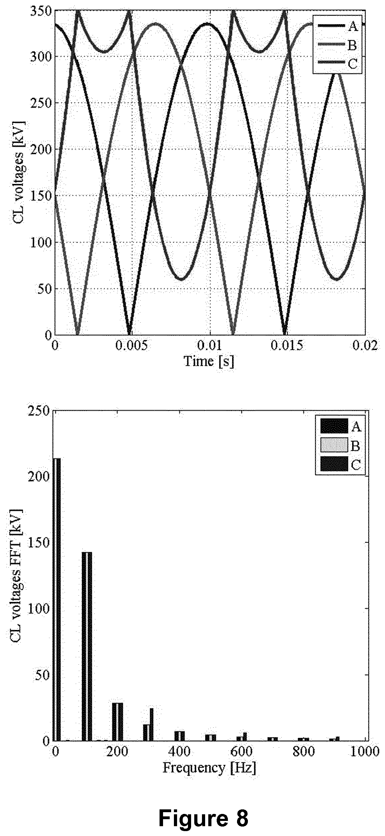

Figure 8 illustrates the voltage waveforms of the first sub-converters 38 and their harmonic content during the single phase-to-ground fault for an active power P = -200 MW and a reactive power Q = -100 MVA prior to the introduction of the additional even harmonic voltage component(s) into the summed DC voltage. The first sub-converter 38 of the limb affected by the single phase-to-ground fault may be used to generate a voltage component to cancel the DC ripple in the summed DC voltage presented to the DC network 58. In addition or in place of the first sub-converter 38 of the affected limb, either or both of the other two first sub-converters 38 may be used to generate a voltage component to cancel the DC ripple in the summed DC voltage presented to the DC network 58.

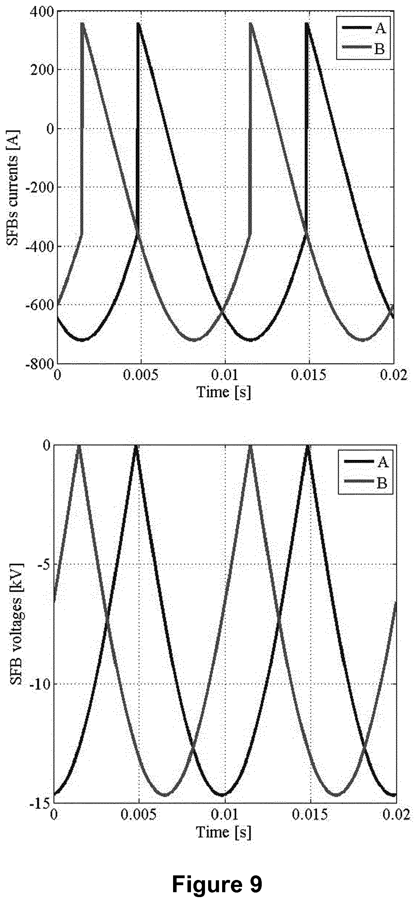

Figure 9 illustrates the current and voltage waveforms of the second sub-converters 39 of the healthy limbs during the single phase-to-ground fault for an active power P = -200 MW and a reactive power Q = -100 MVA.

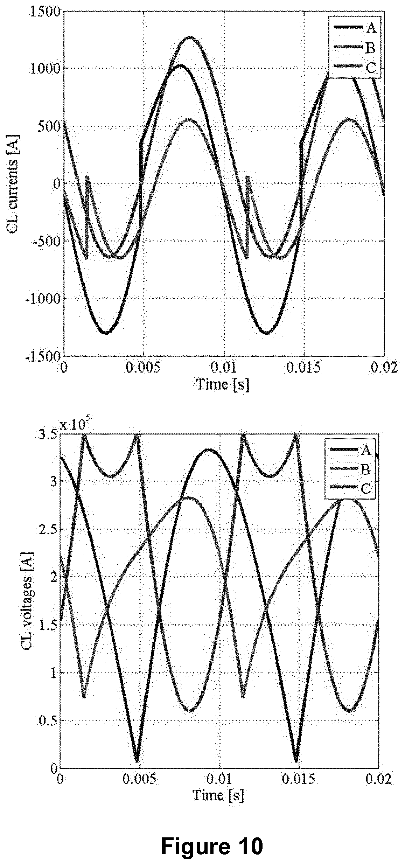

Figure 10 illustrates the current and voltage waveforms of the first sub-converters 38 during the single phase-to-ground fault for an active power P = - 200 MW and a reactive power Q = -100 MVA, in which the voltage waveforms of the first sub-converters 38 of the healthy limbs include even harmonic voltage components for energy regulation of the first and second sub-converters 38 of the healthy limbs.

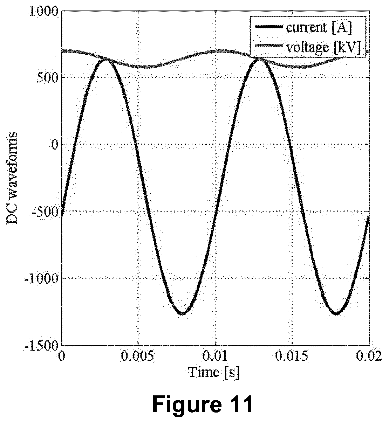

Figure 11 illustrates the operation 114 of the voltage source converter 30 to generate a summed DC voltage presented to the DC network 58 and the circulating current flowing through the first sub-converters 38 during the single phase-to-ground fault for an active power P = -200 MW and a reactive power Q = -100 MVA.

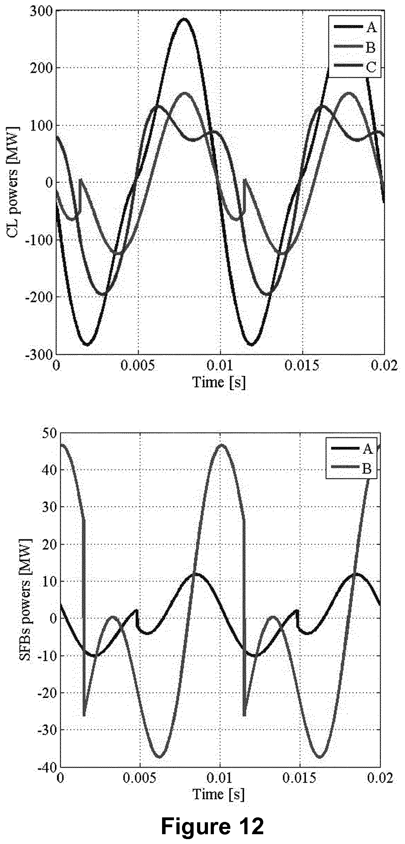

Figure 12 illustrates the instantaneous powers of the first and second sub-converters 38,39 during the single phase-to-ground fault for an active power P = -200 MW and a reactive power Q = -100 MVA. It can be determined (e.g. calculated, computed, etc.) from Figure 12 that the average powers for the first sub-converters 38 corresponding to phases A, B and C are -580 W, 750 W and 810 W respectively, and that the average powers for the second sub-converters 39 corresponding to phases A and B are 250 W and -430 W respectively. These average power values are negligible in comparison to the amount of energy normally stored in the first and second sub-converters 38,39, i.e. the average power values are effectively zero.

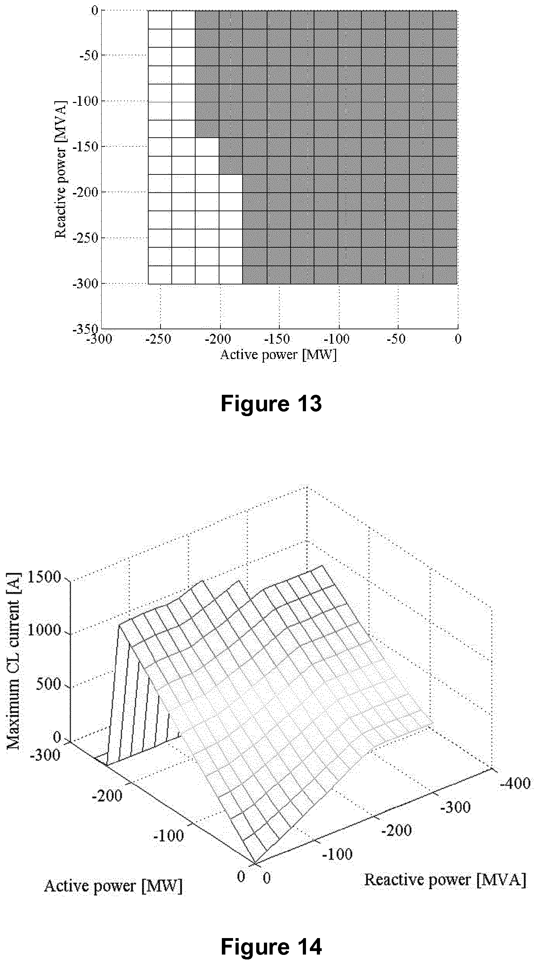

The P-Q operating region for the current and voltage ratings of the sub-converters 38,39 can then be determined. Figure 13 illustrates the P-Q operating region for the voltage source converter 30 during the single phase-to-ground fault, in which the P-Q operating region is determined based on the constraints on the peak current in the first sub-converters 38 and on the voltage ratings of the second sub-converters 39. The maximum active power that can be transferred is 220 MW which corresponds to 37% of the nominal active power ratings, and the maximum reactive power that can be transferred is 140 MVA capacitive. Figure 14 illustrates the peak current in the first sub-converters 38 in relation to the P-Q operating region of Figure 13.

It will be appreciated that a wider operating region for the voltage source converter 30 during the single phase-to-ground fault can be obtained by relaxing the constraints on the peak current in the first sub-converters 38 and/or on the voltage ratings of the second sub-converters 39.

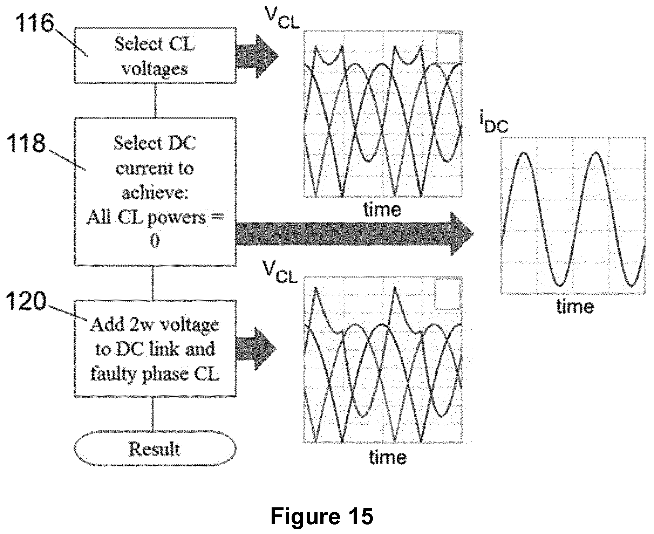

A second exemplary operation of the voltage source converter 30 in response to the single phase-to-ground fault is described with reference to Figure 15, which shows a flowchart of the second exemplary operation of the voltage source converter 30.

The second exemplary operation of the voltage source converter 30 is similar in principle to the first exemplary operation of the voltage source converter 30. However, in the second exemplary operation, the second sub-converters 39 of all of the limbs are bypassed during the single phase-to-ground fault. Hence the second sub-converters 39 of all of the limbs draw zero power during the single phase-to-ground fault.

Accordingly, during the single phase-to-ground fault, the first sub-converters 38 (instead of the second sub-converters 39) of the healthy limbs are operated to shape the second DC voltage at the DC side of the phase element 36 of each healthy limb to take the form of a rectified sinusoidal waveform, in order to shape the AC side voltages at the AC sides 42 of the phase elements 36 of the healthy limbs to be sinusoidal.

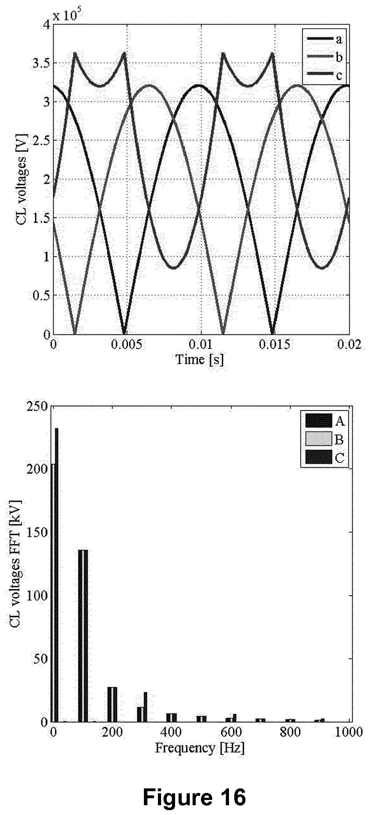

Figure 16 illustrates the voltage waveforms of the first sub-converters 38 and their harmonic content during the single phase-to-ground fault for an active power P = -200 MW and a reactive power Q = -100 MVA prior to the introduction of the additional even harmonic voltage component(s) into the summed DC voltage.

By introducing 116 the additional even harmonic voltage component(s) into the summed DC voltage, the even harmonic current component can be controlled to circulate through the first sub-converters 38 in order to achieve a zero net average power in the first sub-converter 38 of the affected limb. The phase angle and amplitude of the even harmonic current component of the circulating current are selected 118 to ensure that the zero net average power in the first sub-converter 38 of the affected limb is achieved. Also, since the second sub-converters 39 cannot assist in the energy regulation of the first sub-converters 38 by virtue of being bypassed, the phase angle and amplitude of the even harmonic current component of the circulating current are selected to achieve a zero net average power in each first sub-converter 38 of the healthy limbs.

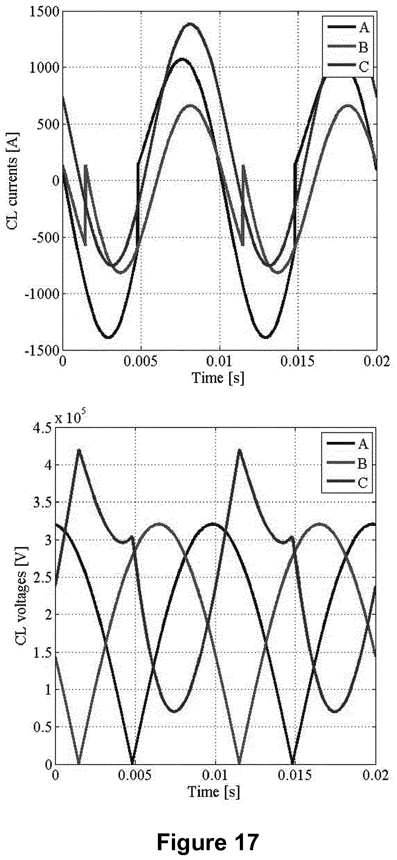

Figure 17 illustrates the current and voltage waveforms of the first sub-converters 38 during the single phase-to-ground fault for an active power P = - 200 MW and a reactive power Q = -100 MVA when the additional even harmonic voltage component(s) introduced into the summed DC voltage.

Although the voltage waveform of the first sub-converter 38 of the affected limb may exceed 60% of the DC network voltage across the first and second DC terminals 32,34, it is not expected to significantly affect the operation of the voltage source converter 30 during the single phase-to-ground fault.

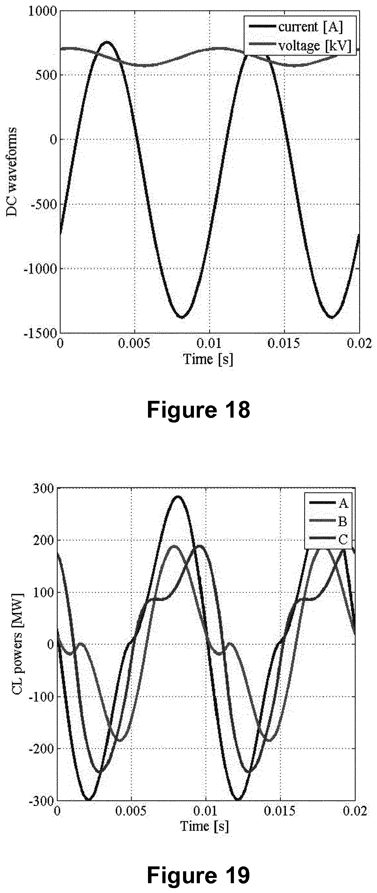

Figure 18 illustrates the operation 120 of the voltage source converter 30 to generate the summed DC voltage presented to the DC network 58 and the circulating current flowing through the first sub-converters 38 during the single phase-to-ground fault for an active power P = -200 MW and a reactive power Q = -100 MVA.

Figure 19 illustrates the instantaneous powers of the first sub-converters 38 during the single phase-to-ground fault for an active power P = -200 MW and a reactive power Q = -100 MVA. It can be determined (e.g. calculated, computed, etc.) from Figure 19 that the average powers for the first sub-converters 38 corresponding to phases A, B and C are -295 W, 195 W and 1.7 kW respectively. These average power values are negligible in comparison to the amount of energy normally stored in the first sub-converters 38, i.e. the average power values are effectively zero.

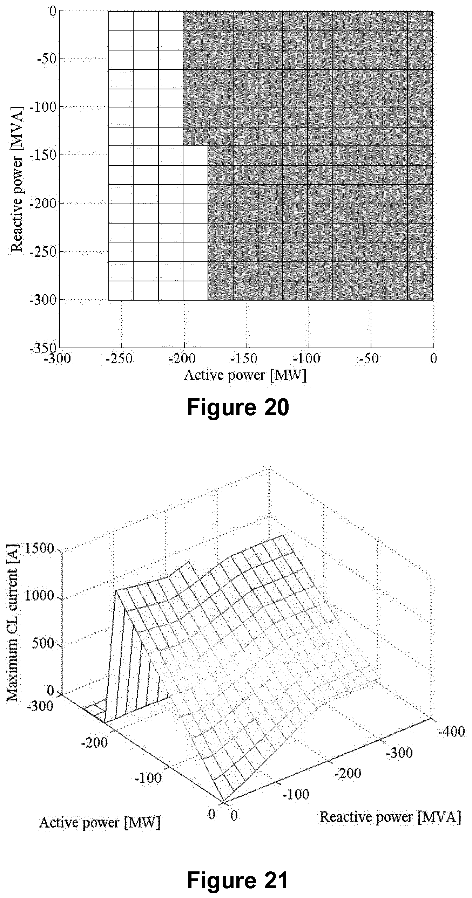

Figure 20 illustrates the P-Q operating region for the voltage source converter 30 during the single phase-to-ground fault, in which the P-Q operating region is determined based on the constraints on the peak current in the first sub-converters 38 and on the voltage ratings of the second sub-converters 39. The maximum active power that can be transferred is 200 MW which corresponds to 30% of the nominal active power ratings, and the maximum reactive power that can be transferred is 140 MVA capacitive. Figure 21 illustrates the peak current in the first sub-converters 38 in relation to the P-Q operating region of Figure 20.

In comparison to the first exemplary operation, the second exemplary operation provides a slightly reduced P-Q operating region but with a simpler energy regulation and control of the voltage source converter 30.

As mentioned above, in practice, the DC network includes cables and inductors with relatively significant amounts of inductance and resistance, which could result in losses due to the flow of the even harmonic current component in the DC network. This means that the additional even harmonic voltage component would not be orthogonal (or substantially orthogonal) to the even harmonic current component. The flow of the even harmonic current component in the DC network results in the dissipation of power in the DC network, which is proportional to the DC network resistance and the square of the even harmonic current component. This in turn affects the amount of energy stored in the first sub-converter 38 of the affected limb which is being operated to generate the additional even harmonic voltage component(s), thus resulting in a non-zero net average power in the first sub-converter 38 of the affected limb.

For example, assuming that a respective 100 km long cable is connected to each DC terminal 32,34 and each cable carries a voltage of +320 kV or -320 kV depending on the associated DC terminal 32,34, the impedance of the cables at 100Hz (which is the second harmonic frequency if the AC network 50 has a frequency of 50 Hz) is approximately (25.74+j18.08) $\Omega$ based on a pi section model. The flow of the even harmonic current component through the cables would cause a power loss of approximately 11 MW for an active power P = -200 MW. The relatively significant amount of power loss would affect the energy stored in the first sub-converter 38 of the affected limb, and therefore must be taken into account in order to achieve a zero net average power in the first sub-converter 38 of the affected limb.

The power drawn from the AC grid is typically negative for the power transfer from the off-shore converter 62 to the on-shore converter 30 shown in Figure 4. The compensation for the power losses resulting from the flow of the even harmonic current component through the cables is carried out by reducing the amount of power delivered to the AC grid in accordance with the following power compensation equation:

$$P_{AC} = P + \frac{R_{2wDC}I_{2wDC}^2}{2}$$

Where nominal power P is normally negative.

The phase and amplitude of the even harmonic current component of the circulating current can therefore be selected to achieve a zero net average power in the first sub-converter 38 of the affected limb by taking into account the need to compensate for the power losses resulting from the flow of the even harmonic current component in the DC network 58. It will be appreciated that the phase and amplitude of the even harmonic current component of the circulating current for this case will be different from the phase and amplitude of the even harmonic current component of the circulating current for the lossless DC network case.

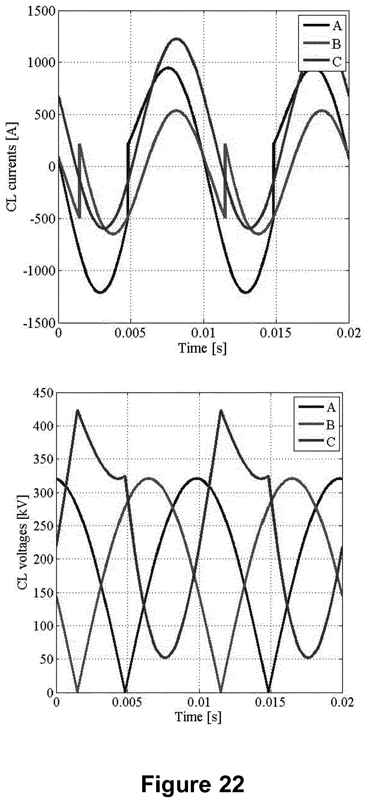

Figure 22 illustrates the current and voltage waveforms of the first sub-converters 38 during the single phase-to-ground fault for an active power P = - 190 MW and a reactive power Q = -100 MVA when the second exemplary operation is carried out to introduce the additional even harmonic voltage component into the summed DC voltage and to compensate for power losses resulting from the flow of the even harmonic current component through the cables of the DC network 58. The phase shift between the additional even harmonic voltage component and the circulating even harmonic current component is no longer 90° due to the significant resistance of the cables of the DC network 58.

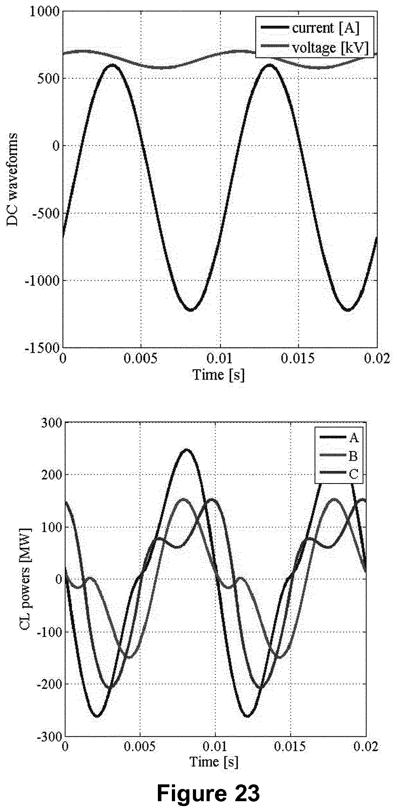

Figure 23 illustrates the instantaneous powers of the first sub-converters 38 during the single phase-to-ground fault for an active power P = -190 MW and a reactive power Q = -100 MVA when the second exemplary operation is carried out to introduce the additional even harmonic voltage component into the summed DC voltage and to compensate for power losses resulting from the flow of the even harmonic current component through the cables of the DC network 58. It can be determined (e.g. calculated, computed, etc.) from Figure 23 that the average powers for the first sub-converters 38 corresponding to phases A, B and C are -400 W, 490 W and 1.4 kW respectively. These average power values are negligible in comparison to the amount of energy normally stored in the first sub-converters 38, i.e. the average power values are effectively zero.

In Figures 22 and 23, the DC network inductance $L_{DC}$ is reduced to 71 mH from 100 mH in order to take into account the additional inductance introduced by the cables.

It will be appreciated that the above selection of the phase and amplitude of the even harmonic current component to compensate for power losses resulting from the flow of the even harmonic current component in the DC network 58 can be applied mutatis mutandis to the first exemplary operation by incorporating the above power compensation equation in the flowchart of Figure 6.

The provision of the controller 60 in the voltage source converter 30 of the invention therefore enables the generation of the summed DC voltage to include the additional even harmonic voltage component, which drives the even harmonic current component to flow through the first sub-converters 38 so that the even harmonic current component interacts with the even harmonic voltage component generated by the first sub-converter 38 of the affected limb in order to modify the power generated by the first sub-converter 38 of the affected limb. Such modification of the power generated by the first sub-converter 38 of the affected limb in turn enables the modification of the DC power exchanged between the affected limb and the DC network 58 in order to achieve a balance between the AC and DC powers exchanged by the affected limb with the AC and DC networks 50,58 respectively, thus avoiding the detrimental consequences of the power imbalance.

The configuration of the controller 60 therefore provides the voltage source converter 30 of the invention with a fault ride through ability in which the voltage source converter 30 is able to continue facilitating the transfer of high quality power between the AC and DC networks 50,58 during the single phase-to-ground fault, without requiring any increase in the voltage rating of one or more of the first sub-converters 38. The continued transfer of high quality power between the AC and DC networks 50,58 during the single phase-to-ground fault prevents additional stress from being imposed on the transformer interconnecting the AC network 50 and the voltage source converter 30.

It will be appreciated that the topology of the voltage source converter 30 of Figure 1 is chosen to help illustrate the working of the invention, and is not intended to be limiting. In this regard the invention is applicable mutatis mutandis to other voltage source converter topologies, so as long as the voltage source converter comprises first and second DC terminals for connection to a DC network, the voltage source converter including a plurality of limbs connected between the first and second DC terminals, each limb including at least one terminal for connection to a AC network, each limb further including a first sub-converter operably connected to the or each terminal, each first sub-converter configured to be controllable to act as a waveform synthesizer to control a DC voltage for presentation to the DC network, wherein the first sub-converters are connected in series between the first and second DC terminals, and wherein each limb is configured to be operable to exchange a respective DC power with the DC network and a respective AC power with the AC network. For example, the invention is applicable to a variation of the topology of the voltage source converter 30 of Figure 1 in which the second sub-converters 39 are omitted from the limbs.

It will be further appreciated that each numerical value given for the embodiment shown is merely chosen to help illustrate the working of the invention, and may be replaced by another numerical value.

**Claims**

1. A voltage source converter comprising first and second DC terminals for connection to a DC network, the voltage source converter including a plurality of limbs connected in series between the first and second DC terminals, each limb including:

   at least one terminal for connection to an AC network (50); and at least one first sub-converter (38) operably connected to the at least one terminal, the first sub-converter (38) configured to be controllable to act as a waveform synthesizer to control a DC voltage for presentation to the DC network (58),
   wherein the first sub-converters (38) of each limb are connected in series, and wherein each limb is configured to be operable to exchange a respective DC power ($P_{DC}$) with the DC network (58) and a respective AC power ($P_A$, $P_B$, $P_C$) with the AC network (50),
   wherein the voltage source converter (30) further includes a controller (60) configured to selectively operate the first sub-converters (38) to generate a summed DC voltage including a first AC even harmonic voltage component ($v_A^k$, $v_B^k$, $v_C^k$) and a second AC even harmonic voltage component for presentation to the DC network (58);
   **characterized in that**
   the controller is further configured to control a circulating current to flow through the first sub-converters (38) in response to a change in the or each AC power ($P_C$) exchanged between at least one of the limbs and the AC network (50), the circulating current including a direct current component and an even harmonic current component resulting from the second AC even harmonic voltage component, wherein the controller is configured to control the even harmonic current component to interact with the first AC even harmonic voltage component generated by the or each first sub-converter (38) of the at least one limb so as to balance the DC and AC powers ($P_{DC}$, $P_c$) exchanged by the at least one limb with the DC and AC networks (58,50) respectively.

2. A voltage source converter (30) according to Claim 1 wherein the AC network (50) is a multi-phase AC network (50), and wherein each limb includes a phase element (36), each phase element (36) including at least one AC terminal for connection to a respective phase of the multi-phase AC network (50), each phase element (36) configured to interconnect a DC side voltage at a DC side of the phase element (36) and an AC side voltage at an AC side (42) of the phase element (36), each first sub-converter (38) operably connected to the DC side of the corresponding phase element (36).

3. A voltage source converter (30) according to any one of the preceding claims wherein the controller (60) is configured to selectively operate the first sub-converters (38) to generate the summed DC voltage ($V_{DC}$) including the first AC even harmonic voltage component ($v_A^k$, $v_B^k$, $v_C^k$) and the second AC even harmonic voltage component for presentation to the DC network (58) so as to control the circulating current to flow through the first sub-converters (38) in response to:

a drop in the or each AC power ($P_c$) exchanged between the at least one limb and the AC network to zero or substantially zero;
an imbalance in the AC powers ($P_A$, $P_B$, $P_c$) exchanged between the plurality of limbs and the AC network (50); and/or
a fault in the AC network (50) which causes the change in the or each AC power ($P_c$) exchanged between the at least one limb and the AC network (50).

4. A voltage source converter (30) according to any one of the preceding claims wherein a phase angle and/or an amplitude of the even harmonic current component is configured so that the even harmonic current component interacts with the first AC even harmonic voltage component generated by the or each first sub-converter (38) of the at least one limb so as to balance the DC and AC powers ($P_c$) exchanged by the at least one limb with the DC and AC networks (58,50) respectively.

5. A voltage source converter (30) according to any one of the preceding claims wherein the phase angle and/or the amplitude of the even harmonic current component is configured relative to the second AC even harmonic voltage component so as to minimise power generated from interaction between the second AC even harmonic voltage component and the even harmonic current component.

6. A voltage source converter (30) according to any one of the preceding claims wherein the even harmonic current component is configured to be:

orthogonal or substantially orthogonal relative to the second AC even harmonic voltage component; or
phase shifted relative to the second AC even harmonic voltage component to compensate for power losses resulting from the flow of the even harmonic current component in the DC network (58).

7. A voltage source converter (30) according to any one of the preceding claims wherein the controller (60) is configured to selectively operate the or each first sub-converter (38) of the at least one limb to generate the second AC voltage component so as to control the even harmonic current component to flow through the first sub-converters (38) in response to the change in the or each AC power ($P_c$) exchanged between the at least one limb and the AC network (50).

8. A voltage source converter (30) according to any one of the preceding claims wherein each first sub-converter (38) includes at least one energy storage device (56) capable of storing and releasing energy to selectively provide a voltage, and wherein the even harmonic current component is configured so that the even harmonic current component interacts with the first AC even harmonic voltage component generated by the or each first sub-converter (38) of the at least one limb so as to balance the DC and AC powers ($P_{DC}$, $P_c$) exchanged by the at least one limb with the DC and AC networks respectively so that a respective net change in energy stored in the or each first sub-converter (38) of the at least one limb is controlled to be zero or substantially zero.

9. A voltage source converter (30) according to any one of the preceding claims wherein each limb further includes a second sub-converter (39) connected between the first sub-converter (38) and the or each terminal, each second sub-converter (39) configured to be controllable to act as a waveform synthesizer to control a voltage for presentation to the or each corresponding terminal.

10. A voltage source converter (30) according to Claim 9 wherein each second sub-converter (39) includes at least one energy storage device (56) capable of storing and releasing energy to selectively provide a voltage.

11. A voltage source converter (30) according to Claim 10 when dependent from Claim 8 wherein the controller (60) is configured to selectively control an exchange of energy between the first and second sub-converters (38,39) in each limb by: for each limb, selectively operating the first sub-converter (38) to synthesize at least one first energy controlling voltage component, and operating the second sub-converter (39) to synthesize at least one second energy controlling voltage component that is in anti-phase with the or each first energy controlling voltage component, wherein each of the first and second energy controlling voltage components is in-phase with a current flowing through the first and second sub-converters (38,39).

12. A voltage source converter (30) according to any one of the preceding claims wherein the even harmonic current component is configured so that the even harmonic current component interacts with the first AC even harmonic voltage component generated by each first sub-converter (38) of the plurality of limbs so as to balance the DC and AC powers ($P_{DC}$, $P_A$, $P_B$, $P_c$) exchanged by each of the plurality of limbs with the DC and AC networks (58,50) respectively.

13. A voltage source converter (30) according to Claim 12 when dependent from Claim 8 wherein the even harmonic current component is configured so that the even harmonic current component interacts with the first AC even harmonic voltage component generated by each first sub-converter (38) of the plurality of limbs so as to balance the DC and AC powers ($P_{DC}$, $P_A$, $P_B$, $P_c$) exchanged by each of the plurality of limbs with the DC and AC networks (58,50) respectively so that a respective net change in energy stored in each first sub-converter (37) of the plurality of limbs is controlled to be zero or substantially zero.

14. A voltage source converter (30) according to any one of the preceding claims wherein each limb includes a plurality of switching elements (54) configured to operably interconnect the first sub-converter (38) and the or each terminal.

15. A voltage source converter (30) according to any one of the preceding claims wherein each sub-converter (38,39) includes at least one module (52), the or each module (52) including at least one switching element (54) and at least one energy storage device (56) capable of storing and releasing energy to selectively provide a voltage, the or each switching element (54) and the or each energy storage device (56) in the or each module (52) arranged to be combinable to selectively provide a voltage source.

**Patentansprüche**

1. Spannungsquellenwandler, der erste und zweite GS-Anschlüsse zur Verbindung mit einem GS-Netz umfasst, wobei der Spannungsquellenwandler eine Vielzahl von Schenkeln beinhaltet, die in Reihe zwischen dem ersten und zweiten GS-Anschluss verbunden sind, wobei jeder Schenkel beinhaltet:

mindestens einen Anschluss zur Verbindung mit einem WS-Netzwerk (50); und
mindestens einen ersten Subwandler (38), der betriebsfähig mit dem mindestens einen Anschluss verbunden ist, wobei der erste Subwandler (38) konfiguriert ist, gesteuert werden zu können, um als ein Wellenformsynthesizer zu agieren, um eine GS-Spannung zur Bereitstellung an das GS-Netzwerk (58) zu steuern, wobei die ersten Subwandler (38) jedes Schenkels in Reihe verbunden sind und wobei jeder Schenkel konfiguriert ist, betrieben werden zu können, um eine jeweilige GS-Leistung ($P_{DC}$) mit dem GS-Netzwerk (58) und eine jeweilige WS-Leistung ($P_A$, $P_B$, $P_C$) mit dem WS-Netzwerk (50) auszutauschen, wobei der Spannungsquellenwandler (30) weiter eine Steuerung (60) beinhaltet, die konfiguriert ist, selektiv die ersten Subwandler (38) zu betreiben, um eine summierte GS-Spannung zu erzeugen, die eine erste WS-gerade-Harmonische-Spannungskomponente ($V_A^k$, $V_B^k$, $V_C^k$) und eine zweite WS-gerade-Harmonische-Spannungskomponente zur Bereitstellung an das GS-Netzwerk (58) beinhaltet;
**dadurch gekennzeichnet, dass** die Steuerung weiter konfiguriert ist, einen zirkulierenden Strom zu steuern, in Antwort auf eine Änderung der oder jeder WS-Leistung ($P_C$), die zwischen mindestens einem der Schenkel und dem WS-Netzwerk (50) ausgetauscht wird, durch die ersten Subwandler (38) zu fließen, wobei der zirkulierende Strom eine Gleichstromkomponente und eine gerade harmonische Stromkomponente beinhaltet, die aus der zweiten geraden harmonischen WS-Spannungskomponente resultiert, wobei die Steuerung konfiguriert ist, die gerade harmonische Stromkomponente zu steuern, mit der ersten geraden harmonischen WS-Spannungskomponente, die von dem oder jedem ersten Subwandler (38) des mindestens einen Schenkels erzeugt wird, zu interagieren, um die GS- und WS-Leistungen ($P_{DC}$, $P_C$) auszugleichen, die von dem mindestens einen Schenkel mit dem GS- beziehungsweise WS-Netzwerk (58, 50) ausgetauscht werden.

**2.** Spannungsquellenwandler (30) nach Anspruch 1, wobei das WS-Netzwerk (50) ein mehrphasiges WS-Netzwerk (50) ist und wobei jeder Schenkel ein Phasenelement (36) beinhaltet, wobei jedes Phasenelement (36) mindestens einen WS-Anschluss zur Verbindung mit einer jeweiligen Phase des mehrphasigen WS-Netzwerks (50) beinhaltet, wobei jedes Phasenelement (36) konfiguriert ist, eine GS-seitige Spannung bei einer GS-Seite des Phasenelements (36) und eine WS-seitige Spannung bei einer WS-Seite (42) des Phasenelements (36) miteinander zu verbinden, wobei jeder erste Subwandler (38) betriebsfähig mit der GS-Seite des entsprechenden Phasenelements (36) verbunden ist.

**3.** Spannungsquellenwandler (30) nach einem der vorstehenden Ansprüche, wobei die Steuerung (60) konfiguriert ist, selektiv die ersten Subwandler (38) zu betreiben, um die summierte GS-Spannung ($V_{DC}$), die die erste gerade harmonische WS-Spannungskomponente ($V_A^k$, $V_B^k$, $V_C^k$) und die zweite gerade harmonische WS-Spannungskomponente beinhaltet, zur Bereitstellung an das GS-Netzwerk (58) zu erzeugen, um den zirkulierenden Strom zu steuern, durch die ersten Subwandler (38) zu fließen, in Antwort auf:

einen Abfall in der oder jeder WS-Leistung ($P_C$), die zwischen dem mindestens einen Schenkel und dem WS-Netzwerk ausgetauscht wird, auf Null oder im Wesentlichen Null;
ein Ungleichgewicht in den WS-Leistungen ($P_A$, $P_B$, $P_C$), die zwischen der Vielzahl von Schenkeln und dem WS-Netzwerk (50) ausgetauscht werden; und/oder
einen Fehler im WS-Netzwerk (50), der die Änderung der oder jeder WS-Leistung ($P_C$) verursacht, die zwischen dem mindestens einen Schenkel und dem WS-Netzwerk (50) ausgetauscht wird.

**4.** Spannungsquellenwandler (30) nach einem der vorstehenden Ansprüche, wobei ein Phasenwinkel und/oder eine Amplitude der geraden harmonischen Stromkomponente so konfiguriert ist, dass die gerade harmonische Stromkomponente mit der ersten geraden harmonischen WS-Spannungskomponente interagiert, die von dem oder jedem ersten Subwandler (38) des mindestens einen Schenkels erzeugt wird, um die GS- und WS-Leistung ($P_C$) auszugleichen, die von dem mindestens einen Schenkel mit dem GS- beziehungsweise WS-Netzwerk (58, 50) ausgetauscht werden.

**5.** Spannungsquellenwandler (30) nach einem der vorstehenden Ansprüche, wobei der Phasenwinkel und/oder die Amplitude der geraden harmonischen Stromkomponente relativ zu der zweiten geraden harmonischen WS-Spannungskomponente konfiguriert ist, um Leistung zu minimieren, die von Interaktion zwischen der zweiten geraden harmonischen WS-Spannungskomponente und der geraden harmonischen Stromkomponente erzeugt wird.

**6.** Spannungsquellenwandler (30) nach einem der vorstehenden Ansprüche, wobei die gerade harmonische Stromkomponente konfiguriert ist zu sein:

orthogonal oder im Wesentlichen orthogonal relativ zu der zweiten geraden harmonischen WS-Spannungskomponente; oder
phasenverschoben relativ zu der zweiten geraden harmonischen WS-Spannungskomponente, um Leistungsverluste zu kompensieren, die aus dem Fluss der geraden harmonischen Stromkomponente in dem GS-Netzwerk (58) resultieren.

**7.** Spannungsquellenwandler (30) nach einem der vorstehenden Ansprüche, wobei die Steuerung (60) konfiguriert ist, den oder jeden ersten Subwandler (38) des mindestens einen Schenkels selektiv zu betreiben, um die zweite WS-Spannungskomponente zu erzeugen, um die gerade harmonische Stromkomponente zu steuern, in Antwort auf die Änderung der oder jeder WS-Leistung (Pc), die zwischen dem mindestens einen Schenkel und dem WS-Netzwerk (50) ausgetauscht wird, durch die ersten Subwandler (38) zu fließen.

**8.** Spannungsquellenwandler (30) nach einem der vorstehenden Ansprüche, wobei jeder erste Subwandler (38) mindestens eine Energiespeichervorrichtung (56) beinhaltet, die im Stande ist, Energie zu speichern und freizusetzen, um selektiv eine Spannung anzubieten, und wobei die gerade harmonische Stromkomponente so konfiguriert ist, dass die gerade harmonische Stromkomponente mit der ersten geraden harmonischen WS-Spannungskomponente interagiert, die von dem oder jedem ersten Subwandler (38) des mindestens einen Schenkels erzeugt wird, um die GS- und WS-Leistung ($P_{DC}$, $P_C$) auszugleichen, die von dem mindestens einen Schenkel mit dem GS- beziehungsweise WS-Netzwerk ausgetauscht werden, sodass eine jeweilige Nettoänderung von Energie, die in dem oder jedem ersten Subwandler (38) des mindestens einen Schenkels gespeichert ist, gesteuert wird, Null oder im Wesentlichen Null zu sein.

9. Spannungsquellenwandler (30) nach einem der vorstehenden Ansprüche, wobei jeder Schenkel weiter eine zweiten Subwandler (39) beinhaltet, der zwischen dem ersten Subwandler (38) und dem oder jedem Anschluss verbunden ist, wobei jeder zweite Subwandler (39) konfiguriert ist, gesteuert werden zu können, als ein Wellenformsynthesizer zu agieren, um eine Spannung zur Bereitstellung an den oder jeden entsprechenden Anschluss zu steuern.

10. Spannungsquellenwandler (30) nach Anspruch 9, wobei jeder zweite Subwandler (39) mindestens eine Energiespeichervorrichtung (56) beinhaltet, die im Stande ist, Energie zu speichern und freizusetzen, um selektiv eine Spannung anzubieten.

11. Spannungsquellenwandler (30) nach Anspruch 10, wenn von Anspruch 8 abhängig, wobei die Steuerung (60) konfiguriert ist, selektiv einen Energieaustausch zwischen den ersten und zweiten Subwandlern (38, 39) in jedem Schenkel zu steuern durch: für jeden Schenkel, selektives Betreiben des ersten Subwandlers (38), um mindestens eine erste energiesteuernde Spannungskomponente zu synthetisieren, und Betreiben des zweiten Subwandlers (39), um mindestens eine zweite energiesteuernde Spannungskomponente zu synthetisieren, die eine Gegenphase zu der oder jeder ersten energiesteuernden Spannungskomponente ist, wobei jede der ersten und zweiten energiesteuernden Spannungskomponenten in Phase mit einem Strom ist, der durch die ersten und zweiten Subwandler (38, 39) fließt.

12. Spannungsquellenwandler (30) nach einem der vorstehenden Ansprüche, wobei die gerade harmonische Stromkomponente so konfiguriert ist, dass die gerade harmonische Stromkomponente mit der ersten geraden harmonischen WS-Spannungskomponente interagiert, die von jedem ersten Subwandler (38) der Vielzahl von Schenkeln erzeugt wird, um die GS- und WS-Leistungen ($P_{DC}$, $P_A$, $P_B$, $P_C$) auszugleichen, die von jedem der Vielzahl von Schenkeln mit dem GS- beziehungsweise WS-Netzwerk (58, 50) ausgetauscht werden.

13. Spannungsquellenwandler (30) nach Anspruch 12, wenn von Anspruch 8 abhängig, wobei die gerade harmonische Stromkomponente so konfiguriert ist, dass die gerade harmonische Stromkomponente mit der ersten geraden harmonischen WS-Spannungskomponente interagiert, die von jedem ersten Subwandler (38) der Vielzahl von Schenkeln erzeugt wird, um die GS- und WS-Leistungen ($P_{DC}$, $P_A$, $P_B$, $P_C$) auszugleichen, die von jedem der Vielzahl von Schenkel mit dem GS- beziehungsweise WS-Netzwerk (58, 50) ausgetauscht werden, sodass eine jeweilige Nettoänderung von Energie, die in jedem ersten Subwandler (37) der Vielzahl von Schenkeln gespeichert ist, gesteuert wird, Null oder im Wesentlichen Null zu sein.

14. Spannungsquellenwandler (30) nach einem der vorstehenden Ansprüche, wobei jeder Schenkel eine Vielzahl von Schaltelementen (54) beinhaltet, die konfiguriert sind, den ersten Subwandler (38) und den oder jeden Anschluss betriebsfähig miteinander zu verbinden.

15. Spannungsquellenwandler (30) nach einem der vorstehenden Ansprüche, wobei jeder Subwandler (38, 39) mindestens ein Modul (52) beinhaltet, wobei das oder jedes Modul (52) mindestens ein Schaltelement (54) und mindestens eine Energiespeichervorrichtung (56) beinhaltet, die im Stande ist, Energie zu speichern und freizusetzen, um selektiv eine Spannung anzubieten, wobei das oder jedes Schaltelement (54) und die oder jede Energiespeichervorrichtung (56) in dem oder jedem Modul (52) eingerichtet sind, kombiniert werden zu können, um selektiv eine Spannungsquelle anzubieten.

## Revendications

1. Convertisseur de source de tension comprenant des première et seconde bornes DC pour connexion à un réseau DC, le convertisseur de source de tension incluant une pluralité de branches connectées en série entre les première et seconde bornes DC, chaque branche incluant :

   au moins une borne pour connexion à un réseau AC (50) ; et
   au moins un premier sous-convertisseur (38) connecté de manière opérationnelle à l'au moins une borne, le premier sous-convertisseur (38) étant configuré pour pouvoir être commandé pour agir comme un synthétiseur de forme d'onde pour commander une tension DC pour présentation au réseau DC (58),
dans lequel les premiers sous-convertisseurs (38) de chaque branche sont connectés en série, et dans lequel chaque branche est configurée pour pouvoir être mise en œuvre pour échanger une puissance DC respective ($P_{DC}$) avec le réseau DC (58) et une puissance AC respective ($P_A$, $P_B$, $P_C$) avec le réseau AC (50),
dans lequel le convertisseur de source de tension (30) inclut en outre une unité de commande (60) configurée pour mettre en œuvre de manière sélective les premiers sous-convertisseurs (38) pour produire une tension DC sommée incluant une première composante de tension harmonique paire AC ($v_A^k$ $V_B^k$, $v_C^k$) et une seconde composante de tension harmonique paire AC pour présentation au réseau DC (58) ;

**caractérisé en ce que**

l'unité de commande est en outre configurée pour commander le passage d'un courant circulant par les premiers sous-convertisseurs (38) en réponse à un changement de la ou de chaque puissance AC ($P_C$) échangée entre au moins une des branches et le réseau AC (50), le courant circulant incluant une composante de courant continu et une composante de courant harmonique paire résultant de la seconde composante de tension harmonique paire AC, dans lequel l'unité de commande est configurée pour commander l'interaction de la composante de courant harmonique paire avec la première composante de tension harmonique paire AC produite par le ou chaque premier sous-convertisseur (38) de l'au moins une branche afin d'équilibrer les puissances DC et AC ($P_{DC}$, $P_C$) respectivement échangées par l'au moins une branche avec les réseaux DC et AC (58, 50).

2. Convertisseur de source de tension (30) selon la revendication 1, dans lequel le réseau AC (50) est un réseau AC à phases multiples (50), et dans lequel chaque branche inclut un élément de phase (36), chaque élément de phase (36) incluant au moins une borne AC pour connexion à une phase respective du réseau AC à phases multiples (50), chaque élément de phase (36) étant configuré pour interconnecter une tension côté DC au niveau d'un côté DC de l'élément de phase (36) et une tension côté AC au niveau d'un côté AC (42) de l'élément de phase (36), chaque premier sous-convertisseur (38) étant connecté de manière opérationnelle au côté DC de l'élément de phase correspondant (36).

3. Convertisseur de source de tension (30) selon l'une quelconque des revendications précédentes dans lequel l'unité de commande (60) est configurée pour mettre en œuvre de manière sélective les premiers sous-convertisseurs (38) pour produire la tension DC sommée ($V_{DC}$) incluant la première composante de tension harmonique paire AC ($v_A^k$ $V_B^k$, $v_C^k$) et la seconde composante de tension harmonique paire AC pour présentation au réseau DC (58) afin de commander le passage du courant circulant par les premiers sous-convertisseurs (38) en réponse à :

une chute de la ou de chaque puissance AC ($P_C$) échangée entre l'au moins une branche et le réseau AC à zéro ou sensiblement à zéro ;
un déséquilibre des puissances AC ($P_A$, $P_B$, $P_C$) échangées entre la pluralité de branches et le réseau AC (50) ; et/ou
un défaut dans le réseau AC (50) qui provoque le changement de la ou de chaque puissance AC ($P_C$) échangée entre l'au moins une branche et le réseau AC (50).

4. Convertisseur de source de tension (30) selon l'une quelconque des revendications précédentes, dans lequel un angle de phase et/ou une amplitude de la composante de courant harmonique paire est configuré de sorte que la composante de courant harmonique paire interagit avec la première composante de tension harmonique paire AC produite par le ou chaque premier sous-convertisseur (38) de l'au moins une branche afin d'équilibrer les puissances DC et AC ($P_C$) respectivement échangées par l'au moins une branche avec les réseaux DC et AC (58, 50).

5. Convertisseur de source de tension (30) selon l'une quelconque des revendications précédentes, dans lequel l'angle de phase et/ou l'amplitude de la composante de courant harmonique paire est configuré par rapport à la seconde composante de tension harmonique paire AC afin de réduire au minimum la puissance produite par interaction entre la seconde composante de tension harmonique paire AC et la composante de courant harmonique paire.

6. Convertisseur de source de tension (30) selon l'une quelconque des revendications précédentes, dans lequel la composante de courant harmonique paire est configurée pour être :

orthogonale ou sensiblement orthogonale par rapport à la seconde composante de tension harmonique paire AC ; ou
déphasée par rapport à la seconde composante de tension harmonique paire AC pour compenser des pertes de puissance résultant du flux de la composante de courant harmonique paire dans le réseau DC (58).

**7.** Convertisseur de source de tension (30) selon l'une quelconque des revendications précédentes, dans lequel l'unité de commande (60) est configurée pour mettre en œuvre de manière sélective le ou chaque premier sous-convertisseur (38) de l'au moins une branche pour produire la seconde composante de tension AC afin de commander le passage de la composante de courant harmonique paire par les premiers sous-convertisseurs (38) en réponse au changement de la ou de chaque puissance AC ($P_C$) échangée entre l'au moins une branche et le réseau AC (50).

**8.** Convertisseur de source de tension (30) selon l'une quelconque des revendications précédentes, dans lequel chaque premier sous-convertisseur (38) inclut au moins un dispositif de stockage d'énergie (56) susceptible de stocker et de libérer de l'énergie pour fournir de manière sélective une tension, et dans lequel la composante de courant harmonique paire est configurée de sorte que la composante de courant harmonique paire interagit avec la première composante de tension harmonique paire AC produite par le ou chaque premier sous-convertisseur (38) de l'au moins une branche afin d'équilibrer les puissances DC et AC ($P_{DC}$, $P_C$) respectivement échangées par l'au moins une branche avec les réseaux DC et AC de sorte qu'un changement net respectif de l'énergie stockée dans le ou chaque premier sous-convertisseur (38) de l'au moins une branche est commandé pour être à zéro ou sensiblement à zéro.

**9.** Convertisseur de source de tension (30) selon l'une quelconque des revendications précédentes, dans lequel chaque branche inclut en outre un second sous-convertisseur (39) connecté entre le premier sous-convertisseur (38) et la ou chaque borne, chaque second sous-convertisseur (39) étant configuré pour pouvoir être commandé pour agir comme un synthétiseur de forme d'onde pour commander une tension pour présentation à la ou chaque borne correspondante.

**10.** Convertisseur de source de tension (30) selon la revendication 9, dans lequel chaque second sous-convertisseur (39) inclut au moins un dispositif de stockage d'énergie (56) susceptible de stocker et de libérer de l'énergie pour fournir de manière sélective une tension.

**11.** Convertisseur de source de tension (30) selon la revendication 10, lorsque dépendante de la revendication 8, dans lequel l'unité de commande (60) est configurée pour commander de manière sélective un échange d'énergie entre les premiers et seconds sous-convertisseurs (38, 39) dans chaque branche en : pour chaque branche, mettant en œuvre de manière sélective le premier sous-convertisseur (38) pour synthétiser au moins une première composante de tension de commande d'énergie, et en mettant en œuvre le second sous-convertisseur (39) pour synthétiser au moins une seconde composante de tension de commande d'énergie qui est en anti-phase avec la ou chaque première composante de tension de commande d'énergie, dans lequel chacune des première et seconde composantes de tension de commande d'énergie est en phase avec un courant passant par les premiers et seconds sous-convertisseurs (38, 39).

**12.** Convertisseur de source de tension (30) selon l'une quelconque des revendications précédentes, dans lequel la composante de courant harmonique paire est configurée de sorte que la composante de courant harmonique paire interagit avec la première composante de tension harmonique paire AC produite par chaque premier sous-convertisseur (38) de la pluralité de branches afin d'équilibrer les puissances DC et AC ($P_{DC}$, $P_A$, $P_B$, $P_C$) respectivement échangées par chacune de la pluralité de branches avec les réseaux DC et AC (58, 50).

**13.** Convertisseur de source de tension (30) selon la revendication 12, lorsque dépendante de la revendication 8, dans lequel la composante de courant harmonique paire est configurée de sorte que la composante de courant harmonique paire interagit avec la première composante de tension harmonique paire AC produite par chaque premier sous-convertisseur (38) de la pluralité de branches afin d'équilibrer les puissances DC et AC ($P_{DC}$, $P_A$, $P_B$, $P_C$) respectivement échangées par chacune de la pluralité de branches avec les réseaux DC et AC (58, 50) de sorte qu'un changement net respectif de l'énergie stockée dans chaque premier sous-convertisseur (37) de la pluralité de branches est commandé pour être à zéro ou sensiblement à zéro.

**14.** Convertisseur de source de tension (30) selon l'une quelconque des revendications précédentes, dans lequel chaque branche inclut une pluralité d'éléments de commutation (54) configurés pour interconnecter de manière opérationnelle le premier sous-convertisseur (38) et la ou chaque borne.

**15.** Convertisseur de source de tension (30) selon l'une quelconque des revendications précédentes, dans lequel chaque sous-convertisseur (38, 39) inclut au moins un module (52), le ou chaque module (52) incluant au moins un élément de commutation (54) et au moins un dispositif de stockage d'énergie (56) susceptible de stocker et de libérer de l'énergie pour fournir de manière sélective une tension, le ou chaque élément de commutation (54) et le ou chaque dispositif de stockage d'énergie (56) dans le ou chaque module (52) étant agencés pour pouvoir être combinés pour fournir de manière sélective une source de tension.

**Figure 1**

**Figure 2a**

**Figure 2b**

**Figure 3**

**Figure 4**

**Figure 5**

**Figure 6**

**Figure 7**

**Figure 8**

**Figure 9**

**Figure 10**

**Figure 11**

**Figure 12**

Figure 13

Figure 14

EP 3 512 088 B1

Figure 15

Figure 16

**Figure 17**

**Figure 18**

**Figure 19**

Figure 20

Figure 21

**Figure 22**

**Figure 23**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3096446 A1